# EUROPEAN PATENT SPECIFICATION

(11) **EP 2 222 779 B1**
(45) Date of publication and mention of the grant of the patent: **14.11.2018**
(21) Application number: 08868318.0
(22) Date of filing: 18.12.2008
(51) Int. Cl.: C08F 283/01, C08L 67/06

(54) **COMPOSITION FOR FIXING WOUND ITEMS**
ZUSAMMENSETZUNG ZUM FIXIEREN VON GEWICKELTEN ARTIKELN
COMPOSITION POUR FIXER DES ARTICLES ENROULÉS

(30) Priority: 20.12.2007 US 8473
(43) Date of publication of application: 01.09.2010
(73) Proprietor: Coatings Foreign IP Co. LLC, Wilmington, DE 19801 (US)
(72) Inventor: BOEHM, Frank-Rainer, 51519 Odenthal (DE); HERM, Michael, 42553 Velbert (DE); GUELTEKIN, Murat, 42389 Wuppertal (DE); TRAPPMANN, Barbara, 40479 Düsseldorf (DE)
(74) Representative: LKGLOBAL Lorenz & Kopf PartG mbB Patentanwälte
(86) International application number: PCT/US2008/087334
(87) International publication number: WO 2009/085898

(56) References cited:
- EP-A- 0 643 467
- EP-A2- 0 442 305
- US-A- 4 128 527
- US-A- 4 169 167
- US-A- 4 387 311
- US-A- 4 760 296
- US-B1- 6 908 692
- NORIYUKI SUZUKI ET AL: "A REVIEW ON THE STRUCTURE AND CHARACTERIZATION TECHNIQUES OF SILANE/MATRIX INTERPHASES", MACROMOLECULAR SYMPOSIA, WILEY VCH VERLAG, WEINHEIM, DE, vol. 108, 1 May 1996 (1996-05-01), pages 19-53, XP000630428, ISSN: 1022-1360

## Description

### Field of the Invention

The present invention refers to a composition for fixing wound items, in particular electrical windings in electrical equipment providing excellent impregnation properties into the wound items as well as extraordinarily good electrical insulation and thermal conductivity.

### Background of the Invention

The use of unsaturated polymers in compositions suitable for impregnating (e,g, by techniques of immersion, dipping, trickling or casting) wound items such as electrical coils and windings, especially windings of magnet wires in electrical devices as well as for casting of electrical devices such as stators, rotors and transformers, for mechanical toughening and fixing, is well known in the art. Various resins can be used for those applications, which typically provide electrical insulation, stabilization of the electrical winding against vibrations, improved aging behaviour and protection against chemical and mechanical impact. As downsizing of electrical devices is a more and more important topic for efficient motors, the improved thermal conductivity of the entire electrical device becomes an important property in this direction, and the impregnation composition is the key component for that,

Insulation properties and thermal conductivity can be improved using inorganic fillers, like, for example, titanium dioxide, silica and aluminium. However, impregnation materials containing such fillers are typically not very homogeneous. This could cause problems regarding storage conditions of the composition and can additionally lead to failure of the penetration into the cavities of electrical windings as well as to failure of the impregnation during operation of the electrical device. DE-A 2638047 and WO 2007/045633 disclose the use of filler particles having a decreased size, but homogeneity is still an issue. Also, the use of waterborne silica particles leads to non-favorable incorporation of water into the impregnation system and/or inorganic filler particles can lead to a significant increase in viscosity, which is not favourable for a good impregnation quality.

It is known that inorganic fillers in wire enamels lead to increased life times of electrical devices, see for example WO 00/54286, US4760296. WO 00/54286 discloses organic-inorganic hybrid network compositions for electrical wires comprising reactive particles providing high mechanical and insulation properties under mechanical stress.

### Summary of the Invention

The invention provides a composition for fixing wound items comprising
A) 1 to 60 wt% of at least one a, β -unsaturated polyester and/or polyester imide resin based on at least one unsaturated mono-, di- or tricarboxylic acids and/or mono-, di- or tricarboxylic acid group containing molecules, at least one polyol and/or, in case of an unsaturated polyester imide, at least one imide having 5-membered cyclic imide moieties,
   wherein said at least one α, β -unsaturated polyester and/or polyester imide resin is obtained by reaction of
   (a) at least one a, β - ethylenically unsaturated dicarboxylic acid, its anhydride and/or an ester of the a, β - ethylenically unsaturated dicarboxylic acid, and
   (b) at least one alcohol having one or more hydroxyl functionalities per molecule, and,
   (c) in case of a polyester imide, at least one imide group containing substance with the formula 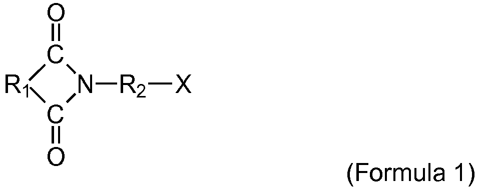 in which the carbonyl groups are in a 1.2-position,
      or 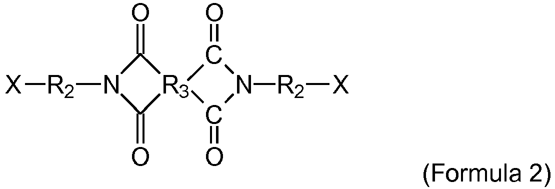 in which at least 2 of the 4 carbonyl groups are in a 1.2-position,
      or 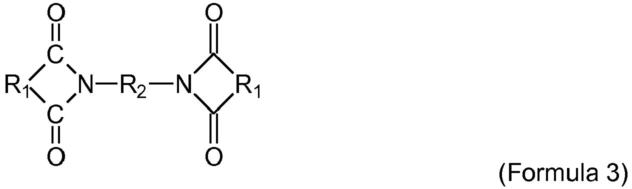 in which
      R₁ is an aliphatic, cycloaliphatic or aromatic moiety that contains at least one reactive carboxyl or hydroxyl group or a C=C double bond or combinations thereof,
      R₂ is an aliphatic, aromatic or cycloaliphatic moiety with 2 to 30 carbon atoms that may also contain oxygen or nitrogen atoms,
      R₃ is an aliphatic, cycloaliphatic or aromatic moiety, and
      X is a hydroxyl or carboxy functionality, and
   (d) possibly one or more mono, di- or tricarboxylic acids which are different from (a), and
   (e) possibly one or more polyether polyols or polymeric polyols, and
   (f) possibly one or more polyisocyanates;
B) 0.1 to 80 wt% of at least one inorganic and/or organic-inorganic hybrid component having functionalities to react with component A) and C), wherein component B) is a colloidal solution of an inorganic polymeric substance of at least one oxide of metals, metalloids or non-metals chemically bound to carbon, oxygen, nitrogen, sulphur and/or halogen atoms under forming polymers, carrying reactive groups which, upon curing of the impregnating resin composition, are able to chemically bind to the organic components A) and/or C);
C) 2 to 80 wt% of at least one monomeric and/or oligomeric unsaturated component to react with component A) and B), and
D) 0 to 15 wt% of customary additives,
the wt% being based on the total weight of the composition.

The composition of the present invention provides excellent thermal transfer properties and a high level of electrical insulation properties with excellent adhesion and thermal stability. Surprisingly, excellent impregnation properties due to low viscosities even with a high level of inorganic matter could be achieved.

### Detailed Description

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The slight variations above and below the stated ranges of numerical values can be used to achieve substantially the same results as values within the ranges. Also, the disclosure of these ranges is intended as a continuous range including every value between the minimum and maximum values.

The term "typical" means "known by a person skilled in the art".

All the number or weight average molar mass data stated in the present description are determined or to be determined by gel permeation chromatography (GPC; divinylbenzene-cross-linked polystyrene as the immobile phase, tetrahydrofuran as the liquid phase, polystyrene standards).

The term (meth)acryl refers to acryl and/or methacryl in this document.

The composition according to the invention provides a chemical network between the inorganic and the organic items of the composition after curing.

The composition according to the invention comprises the at least one polyester and/or polyester imide resin of component A) in a range of 1 to 60 wt%, preferred are 15 to 60 wt%, the wt% being based on the total weight of the composition. The resins of component A) may have a hydroxyl value below 80 mg KOH/g, preferably below 60 mg KOH/g, an acid value below 70 mgKOH/g, preferably below 50 mgKOH/g, as well as a urethane group concentration of 0 to 0.1 mol per 100g resin A).

The component A) can be obtained by reaction of
(a) at least one α, β - ethylenically unsaturated dicarboxylic acid, its anhydride and/or an ester of the α, β - ethylenically unsaturated dicarboxylic acid, and
(b) at least one alcohol having one or more, preferably 2, 3 or 4, hydroxyl functionalities per molecule, and,
(c) in case of a polyester imide, at least one imide group containing substance with the formula 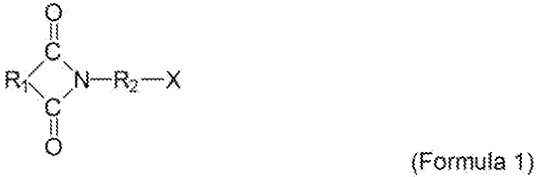 in which the carbonyl groups are in a 1,2-position,
   or 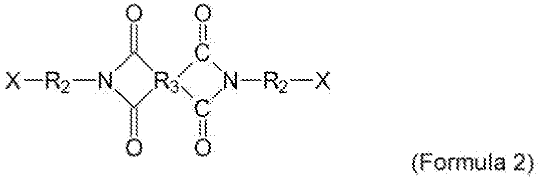 in which at least 2 of the 4 carbonyl groups are in a 1.2-position,
   or 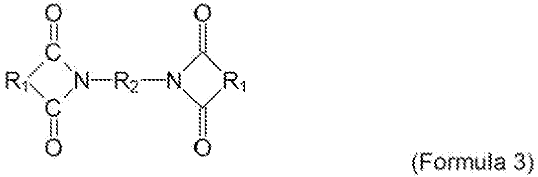 in which
   R₁ is an aliphatic, cycloalipliatic or aromatic moiety that contains at least one reactive carboxyl or hydroxyl group or a C=C double bond or combinations thereof,
   R₂ is an aliphatic, aromatic or cycloaliphatic moiety with 2 to 30 carbon atoms that may also contain oxygen or nitrogen atoms,
   R₃ is an aliphatic, cycloaliphatic or aromatic moiety, and
   X is a hydroxyl or carboxy functionality, and
(d) possibly one or more mono, di- or tricarboxylic acids which are different from (a), and
(e) possibly one or more polyether polyols or polymeric polyols, and
(f) possibly one or more polyisocyanates.

The ratio of the reaction components a) to f) are chosen in such a way, known to a person skilled in the art, that 100 g of component A) contain 0.05 to 0.50 mol of polymerizable, a, β - ethylenically unsaturated groups from component (a), in case of a polyester imide the amount of imidically bonded nitrogen in A) is at least 0,5 wt%, preferably at least 1.5 wt% based on A). The number average molecular weight of component A) is in a range of, for example, 400 to 5000 g/mol.

Typical a, β - ethylenically unsaturated dicarboxylic acids (a) are, for example, those with 4 or 5 carbon atoms, or their anhydrides or esters. Examples are maleic anhydride, fumaric acid, citraconic anhydride or mesaconic acid. Preferably, maleic anhydride is used.

Typical alcohols of (b) are, for example, mono-, di- or trifunctional alcohols with 2 to 18 carbon atoms like 8(9)-hydroxytricyclo[5.2.1.0^{2.6}]dec-3-en, 1,4-bis-hydroxymethyl cyclohexane, 2,2-bis-(4-hydroxycyclohexyl)-propane, neopentyl glycol (NPG), trimethylol propane (TMP), tris(hydroxyethyl)isocyanurate (THEIC) and pentaerythritol. The use of triols leads to branched structures.

Typical imide groups containing substrates (c) are the reaction products of tricarboxylic acids or their anhydrides, like trimellitic anhydride, 3,3',4-benzophenone tricarboxylic acid anhydride, tricarballylic acid or unsaturated cycloaliphatic or aliphatic dicarboxylic acid anhydrides like tetrahydrophthalic anhydride, endo-methylene tetrahydrophthalic anhydride or maleic anhydride with aliphatic, cycloaliphatic, heterocyclic or aromatic aminoalcohols or aminocarboxylic acids, Appropriate aminoalcohols are e.g. ethanolamine, propanolamine, butanolamine, their higher homologues, 4-aminocyclohexanol, 4-aminobenzyl alcohol or aromatically amino-substituted phenyl ether alcohols. Suitable aminocarboxylic acids are e.g. aminoacetic acid, aminopropionic acid, aminocapronic acid and 4-aminobenzoic acid.

Further examples for substances (c) are reaction products of tetracarboxylic acids or their anhydrides like pyromellitic anhydride, benzophenone tetracarboxylic acid dianhydride, butane tetracarboxylic acid dianhydride, cyclopentane tetracarboxylic acid dianhydride with aliphatic, cycloaliphatic, hetereocyclic or aromatic aminoalcohols or aminocarboxylic acids, and/or reaction products of 2 mols of tricarboxylic acids or their anhydrides like trimellitie anhydride or 3,3',4-benzophenone tricarboxylic acid anhydride with 1 mol aromatic diamines like 4,4'-diamino diphenylmethane, 4,4'-diamino diphenylether or aliphatic and cycloaliphatic diamines like 4,4'-diamino dicyclohexylmethane, ethylene diamine, propylene diamine or aliphatic etheramines. Instead of the above mentioned diamines, also the respective diisocyanates can be used, and instead of the above mentioned anhydrides the respective carboxylic acids can be used. Preferred imide group containing substances (c) are the reaction products of tetrahydrophthalic anhydride or trimellitic anhydride with ethanolamine,

Typical carboxylic acids (d) can be saturated and/or unsaturated aliphatic, cycloaliphatic and/or aromatic mono-, di-, tri- and/or tetracarboxylic acids, anhydrides and/or esters, especially alkyl esters having 1 to 4 carbon atoms in the alkyl chain. Examples are dicyclopentadiene dimaleinate, tetrahydrophthalic acid anhydride, *endo-*methylene tetrahydrophthalic anhydride, trimellitic anhydride, terephthalic acid, isophthalic acid, tetrachlorophthalic acid, hexachiorophthalic acid, adipic acid, glutaric acid, sebacinic acid, oligo- and/or polymeric fatty acids,

Typical examples for (e) are polyethylene glycol, polypropylene glycol, polytetrahydro furane, reaction products of the addition of ethylene oxide or propylene oxide to polyfunctional alcohols with 2 to 4 hydroxy groups like glycerol, trimethylol ethane, trimethylol propane, triethanolamine or pentaerythritol or with polyfunctional phenols with 2 to 4 hydroxyl groups like catechol, hydroquinone, bisphenol A or bisphenol F, further examples are hydroxyfunctional homo- or copolymers obtained by radical polymerization, hydroxyfunctional polycarbonates or hydroxyfunctional polyester with weight average molar mass between 400 and 10000 g/mol.

The polyisocyanates (f) are preferably polyisocyanates containing 2 or more isocyanate groups, for example, aliphatic, cycloaliphatic or aromatic diisocyanates with 6 to 18 carbon atoms like 1,6-hexamethylene diisocyanate, 2,4'- and 4,4-dicyclohexylmethane diisocyanate, 3-Isocyanatomethyl-3,5,5-trimethyl cyclohexylisocyanate, 2,2,3- and 2,4,4-trimethyl hexamethylene diisocyanate, cyclohexanone 1,3- and 1, 4-diisocyanate, 2,4- and 2,6-toluylene diisocyanate, 2,4'- and 4,4'-diphenylmethane diisocyanate, polyisocyanates that are obtained by reaction of a polyisocyanate with a substoichiometric amount of polyols, or trimerization products of above mentioned polyisocyanates, or products with biuret structures made from above mentioned polyisocyanates, or products with uretdione structures made from above mentioned polyisocyanates. Preferred are aromatic isocyanates like 2,4 - and 4,4'-diphenylmethane diisocyanate and their mixtures.

In case all components (a) to (f) are used the component (f) is preferredly used in such an amount that the urethane group content of the unsaturated polyester or polyester imide A) is below or equal to 0.05 equivalents per 100g of A).

The polyester imides or polyesters A) may be prepared by methods well known to a person skilled in the art, for example, by polyesterification by heating the components, e.g. to temperatures of 120 to 240°C in a melt process under inert gas or in an azeotropic process, possibly in the presence of polyesterification catalysts.

The ratios of the amounts of the components (a) to (f) are chosen in such a way, known at a person skilled in the art, that the weight average molar mass of the resulting resin A) is in the range of 400 to 5000 g/mol, preferably 600 to 3000 g/mol.

The component B) of the composition according to the invention is an inorganic polymeric substance carrying reactive groups which, upon curing of the impregnating resin composition, are able to chemically bind to the organic components A) and/or C).

Examples for the inorganic polymeric substance B) are inorganic linear or branched polymers or oligomers, e.g. at least one oxide of metals, metalloids or non-metals like aluminium, phosphorus, sulphur, boron, magnesium, silicon, selenium, germanium, zinc, yttrium, cerium, vanadium, hafnium, gallium, lead, nickel, tantalum, titanium, zirconium, chromium, manganese, tin, or bismuth. The metals, metalloids or non-metals are chemically bound to carbon, oxygen, nitrogen, sulphur and/or halogen atoms under forming polymers; these polymers are selected from, for example, silicones, poly(alkoxy)silicates, poly(hydroxy)silicates, poly(alkoxy)titanates, poly(hydroxy)titanates, poly(oxo)metallates, poly(alkoxy)titanates, poly(hydroxy)titanates, poly(alkoxy)zirconates, poly(hydroxy)zirconates, poly(hydroxy)tin, poly(alkoxy)tin compounds. The polymers can be highly crosslinked and can be used as colloidal solution like colloidal titanium dioxide, colloidal zirconium dioxide, colloidal tin oxide or colloidal silica solutions.

Preferred components B) are polymers or colloidal solutions based of silicon, titanium or zirconium and oxygen atoms, which contain hydroxyl and/or alkoxy groups and/or hydroxyalkyloxy groups and/or organic moieties that carry epoxy and/or isocyanate and/or unsaturated groups, which may also be of polymeric nature, e.g. poly(epoxyacrylates) or unsaturated polyesters. Additionally, the polymers or colloidal solutions of B) may be modified with non reactive groups like e.g. methyl, ethyl, butyl, octyl or decyl to improve the compatibility with the components A) and C).

The component B) is able to form covalent bonds with component A) and/or component C) via, for example, esterification, transesterification, radical polymerization or polyaddition, during the curing (cross-linking) of the composition according to the invention.

The component (C) is characterized by ethylenically unsaturated structures having one or more vinylic or allylic double bonds, which are radically polymerizable. Examples are styrene, vinyl toluene, p-methyl styrene, tert.-butyl styrene, divinyl benzene, N-vinyl pyrrolidone, hydroxybutyl vinyl ether, butane diol vinyl ether, triethylene glycol divinyl ether, phthalic acid diallyl ester, fumaric acid diallyl ester, triallyl phosphate, triallyl isocyanurate, diallyl benzene, diallyl bisphenol A, pentaerythritol tri or tetra allyl ether. Component (C) may be also acrylic or methacrylic acid esters like hydroxyethyl (meth)acrylate, hydroxypropyl (meth)acrylate, phenoxyethyl (meth)acrylate, dicyclopentadiene (meth)acrylate, butane diol di(meth)acrylate, hexane diol di(meth)acrylate, dipropylene glycol di(meth)acrylate, trimethylol propane di- and tri(meth)acrylate, pentaerythritol di- and tri(meth)acrylate, epoxy resin (meth)acrylates, (meth)acrylates of reaction products of a polyaddition of ethylene or propylene oxide with polyols such as trimethylol propane or pentaerythritol, and (meth)acrylates of oligo(ethylene glycol) or oligo(propylene glycol), Preferred examples for (C) are styrene, vinyl toluene, hexane diol dimethacrylate, butane diol dimethacrylate and (meth)acrylates of reaction products of a polyaddition of ethylene oxide with trimethylol propane or mixtures thereof.

Up to 50 wt% of the component (C) can consist of monomers with polymerizable groups like maleic or fumaric bis-alkyl esters, in which the alkyl groups contain 1 to 4 carbon atoms, or like mono- or bis-maleic imides (see also DE-A-2040094, DE-A-2719903, DE-A-3247058 and EP-A-0255802).

The component (D) of the invention comprises customary additives known at a person skilled in the art, for example, extenders, plasticising components, accelerators, for example metal salts, substituted amines; initiators, for example photo initiators, such as, chorine containing photoinitiators, aromatic ketones, hydroxyalkyl phenones, initiators, such as, peroxides, hydroperoxides, ketone peroxides, heat-responsive initiators, such as, C-C-labile 1,2-substituted tetraphenyl ethanes having, for example, the formula YPh₂C-CPh₂Y with Ph: phenyl, Y: -OH, -OCH₃, - OC₆H₅, -CH₃, -CN, -NH₂, -Cl or -OSi(CH₃)₃; stabilisers (inhibitors), for example, hydroquinones, quinones, quinone-type inhibitors, phenol-type inhibitors, organic salts of metals and/or sterically hindered aliphatic or aromatic amines; alkylphenols, alkylphenol ethers, defoamers and flow control agents. For the adjustment of special properties like curing speed, surface hardness and surface smoothness, further polymerizable oligomers, polymers or copolymers can be added, for example, liquid poly(butadiene)s like (meth)acrylated poly(butadiene, epoxy(meth)acrylates, urethane (meth)acrylates, polyester (meth)acrylates, unsaturated polyesters and polyester imides, different from A). Further additives may be fiber-like reinforcement agents like carbon, glass, polyamide, polyester, polyacrylnitrile, polyaramide, polyamideimide or polycarbonate fibers or fillers like chalk, talc, aluminium hydroxide, quartz flour, slate flour, clay or microdolomite; organic and inorganic pigments, dyes, thixotropy agents and shrinkage reducing agents. The amount of such additives in the composition is depending on the respective application, and is known at a person skilled in the art.

The components A). B), C) and (D) may be mixed as readily prepared materials in any sequence. The components A), B) and/or D) may also be dissolved in (C) and afterwards mixed together. It is also possible to prepare components A) and B) in one step, e.g. by preparation of an unsaturated polyester in presence of a colloidal solution. This mixture may then be dissolved in C) and mixed with (D) or in a solution of D) in C).

The use of the composition according to the invention may be proceed by processes known in the art, for example, by dip impregnation, vacuum impregnation or trickle impregnation. In the dip impregnation process, the substrates are dipped into the composition for a certain time or pulled through the composition, The substrate may be heated to temperatures below the curing temperature of the composition before dipping. In the vacuum impregnation process, the substrates are placed into a closed container, vacuum is applied, then the composition of the invention can be flushed into the container, In the trickle impregnation process, the composition according to this invention can be trickled with e.g. a nozzle onto the rotating substrate.

It can be useful to heat the substrate to temperatures below the curing temperature of the composition, for a good penetration. The heating may be provided by methods known in the art, for example, by electrical current or in an oven, for example, during or before impregnation application.

After the impregnation application the composition according to this invention can be cured. This can be proceed, for example, by radical polymerization, and for this radical polymerization, it is useful to add radical initiators as part of component D) to the composition of the invention. The curing may be carried out by heating the impregnated substrate and/or by irradiation the impregnated substrate with high-energy radiation.

The heat for curing can be produced, for example, by passing an electrical current through the windings; it is also possible to use an oven or an infrared (IR) or a near infrared radiation (NIR) source. The heating temperature (object temperature) may be in the range of 80 to 180°C, Typical curing times are, for example, 1 minute to 180 minutes, in case of NIR radiation the curing time may be shorter, for example, below 1 minute. The composition according to this invention can also be cured at low temperatures, under the use of additives such as aromatic amines or salts of cobalt, copper, cerium or vanadium.

The coating according to this invention can also be cured by the application of high-energy radiation, e.g. ultraviolet (UV) light or electron beam. For UV curing, adequate initiators can be used, for example, photoinitiators that absorb in a wavelength range of 190 to 450 nm.

Also the combination of photoinitiators with thermally labile initiators is possible, e.g. for a combination of heat curing and UV curing.

The high-energy radiation may be used for the acceleration of the curing process, but also for the through-curing of the applied composition, depending on the impregnation layer thickness. UV- and electron beam radiation can also be used to cure only the surface of the impregnation composition of the invention applied on the substrate, in order to reduce emission of volatile monomers of the composition in a thermal curing step afterwards.

Surprisingly, it is possible to add the composition according to this invention as additive material in amounts of 5 to 50 wt% to curable, polymerizable oligomers, polymers and copolymers which leads to an improvement of mechanical toughness, thermal transfer properties and electrical insulation.

The composition according to this invention can be used in several fields of applications. They are especially useful for the fixing of wound items such as coiled substrates, especially of electrical windings like magnet wires in electrical devices like rotors, stators or transformers, or of coiled metal foils in the electrical sector, or coiled substrates on the basis of glass fibers, plastic fibers or plastic foils, and may also be used for the impregnation of fabrics.

The invention will be described with reference to the following examples:

### Examples

### Example 1

### Component A)

Component A is an unsaturated polyester based on maleic anhydride, castor oil, tetrahydrophthalic anhydride, ethanolamine and neopentyl glycol (acid value 12mgKOH/g, double bond equivalent weight 500g/mol).

### Preparation of Impregnating Resin Compositions

### 1,1 Composition of prior art

65 parts of component A) are heated to 100°C and dissolved in 35 parts of the peracrylated reaction product of trimethylol propane and ethylene oxide (molar ratio 1:4, component C). After cooling to <40°C, 1.4 parts of a C-C radical initiator (benzpinakol ether, component D) are added and mixed well.

### 1.2 Composition of the invention

65 parts of component A) are heated to 100°C and dissolved in 70 parts of a 50% colloidal solution of methacryl functional silica (component B) in the peracrylated reaction product of trimethylol propane and ethylene oxide (molar ratio 1:4. component C). After cooling to <40°C, 1.9 parts of a C-C radical initiator (benzpinakol ether, component D) are added and mixed well.

### Example 2

### Curing Process and Results

Copper conductors were coated with the impregnating resin compositions at room temperature (20-22 °C) to yield a defined film thickness of 40µm. Curing was carried out at 160°C for one hour. The coated copper conductors were pressed together and connected to a frequency inverter. The coated copper conductors were then stressed with corona discharges (2.5 kV peak-to-peak, 20kHz). The time until breakdown of the insulating layers (short cut) was measured.

**Table 1: Test Results**

| **Example** | **Lifetime under corona stress** |
|---|---|
| 1,1 | 1h 10min |
| 1,2 | >1000h |

## Claims

1. A composition for fixing wound items comprising
A) 1 to 60 wt% of at least one a, β -unsaturated polyester and/or polyester imide resin based on at least one unsaturated mono-, di- or tricarboxylic acids and/or mono-, di- or tricarboxylic acid group containing molecules, at least one polyol and/or, in case of an unsaturated polyester imide, at least one imide having 5-membered cyclic imide moieties,
wherein said at least one a, β -unsaturated polyester and/or polyester imide resin is obtained by reaction of
(a) at least one a, β - ethylenically unsaturated dicarboxylic acid, its anhydride and/or an ester of the a, β - ethylenically unsaturated dicarboxylic acid, and
(b) at least one alcohol having one or more hydroxyl functionalities per molecule, and,
(c) in case of a polyester imide, at least one imide group containing substance with the formula 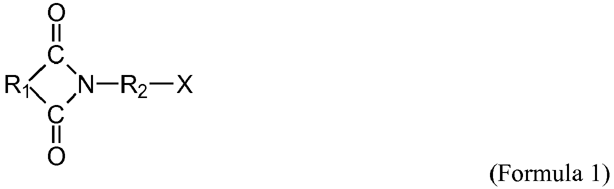 in which the carbonyl groups are in a 1.2-position,
or 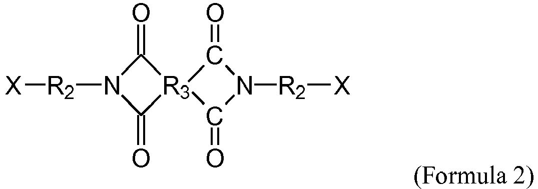 in which at least 2 of the 4 carbonyl groups are in a 1.2-position,
or 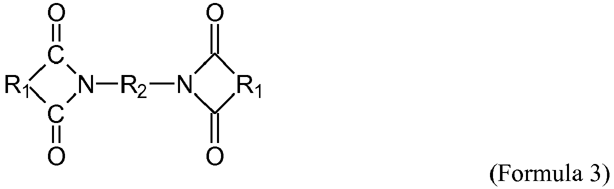 in which
R₁ is an aliphatic, cycloaliphatic or aromatic moiety that contains at least one reactive carboxyl or hydroxyl group or a C=C double bond or combinations thereof,
R₂ is an aliphatic, aromatic or cycloaliphatic moiety with 2 to 30 carbon atoms that may also contain oxygen or nitrogen atoms,
R₃ is an aliphatic, cycloaliphatic or aromatic moiety, and
X is a hydroxyl or carboxy functionality, and
(d) possibly one or more mono, di- or tricarboxylic acids which are different from (a), and
(e) possibly one or more polyether polyols or polymeric polyols, and
(f) possibly one or more polyisocyanates;
B) 0.1 to 80 wt% of at least one inorganic and/or organic-inorganic hybrid component having functionalities to react with component A) and C) wherein component B) is a colloidal solution of an inorganic polymeric substance of at least one oxide of metals, metalloids or non-metals chemically bound to carbon, oxygen, nitrogen, sulphur and/or halogen atoms under forming polymers, carrying reactive groups which, upon curing of the impregnating resin composition, are able to chemically bind to the organic components A) and/or C);
C) 2 to 80 wt% of at least one monomeric and/or oligomeric unsaturated component to react with component A) and B), and which is **characterized by** ethylenically unsaturated structures having one or more vinylic or allylic double bonds, which are radically polymerizable; and
D) 0 to 15 wt% of customary additives,
the wt% being based on the total weight of the composition.

2. The composition according to claim 1 wherein component A) has a number average molecular weight in a range of 400 to 5000 g/mol.

3. The composition according to claim 1 or 2 wherein component B) is a component selected from silicones, poly(alkoxy)silicates, poly(hydroxy)silicates, poly(alkoxy)titanates, poly(hydroxy)titanates, poly(oxo)metallates, poly(alkoxy)titanates, poly(hydroxy)titanates, poly(alkoxy)zirconates, poly(hydroxy)zirconates, poly(hydroxy)tin and/or poly(alkoxy)tin compounds.

4. A process for fixing wound items comprising the steps
(a) impregnating the wound items by applying the composition according to claims 1 to 3, and
(b) curing the applied composition.

5. The process according to claim 4 wherein the wound items are electrical windings.

## Patentansprüche

1. Zusammensetzung zum Fixieren von gewickelten Gegenständen, umfassend
A) 1 bis 60 Gew.-% von zumindest einem α,β-ungesättigten Polyester- und/oder Polyesterimidharz, basierend auf zumindest einer ungesättigten Mono-, Di- oder Tricarbonsäure und/oder Molekülen, die Mono-, Di- oder Tricarbonsäuregruppen enthalten, zumindest einem Polyol und/oder, im Falle eines ungesättigten Polyesterimids, zumindest einem Imid, das fünfgliedrige cyclische Imideinheiten aufweist,
worin das zumindest eine α,β-ungesättigte Polyester und/oder Polyesterimidharz erhalten ist durch Umsetzung von
(a) zumindest einer α,β-ethylenisch ungesättigten Dicarbonsäure, deren Anhydrid und/oder einem Ester der α,β-ethylenisch ungesättigten Dicarbonsäure, und
(b) zumindest einem Alkohol, der eine oder mehrere Hydroxylfunktionalitäten pro Molekül aufweist, und
(c) im Falle eines Polyesterimids, zumindest einer Imidgruppen enthaltenden Substanz mit der Formel 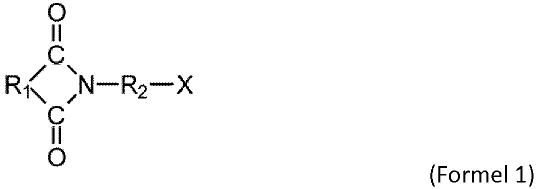 in der sich die Carbonylgruppen in einer 1,2-Position befinden,
oder 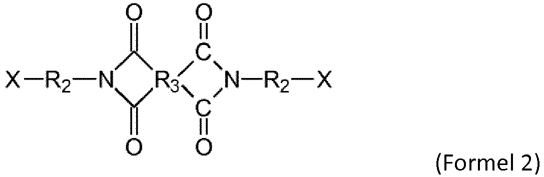 in der sich zumindest 2 der 4 Carbonylgruppen in einer 1,2-Position befinden,
oder 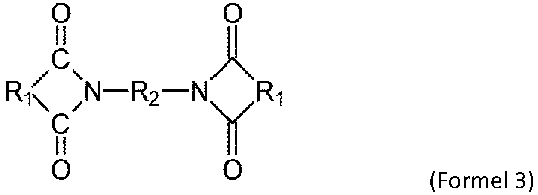 in der
R₁ eine aliphatische, cycloaliphatische oder aromatische Gruppe ist, die zumindest eine reaktive Carboxyl- oder Hydroxylgruppe oder eine C=C-Doppelbindung oder Kombinationen davon enthält,
R₂ eine aliphatische, aromatische oder cycloaliphatische Gruppe mit 2 bis 30 Kohlenstoffatomen ist, die auch Sauerstoff- oder Stickstoffatome enthalten kann,
R₃ eine aliphatische, cycloaliphatische oder aromatische Gruppe ist, und
X eine Hydroxyl- oder Carboxyfunktionalität ist, und
(d) möglicherweise einer oder mehreren Mono-, Di- oder Tricarbonsäuren, die von (a) verschieden sind, und
(e) möglicherweise einem oder mehreren Polyetherpolyolen oder polymeren Polyolen, und
(f) möglicherweise einem oder mehreren Polyisocyanaten;
B) 0,1 bis 80 Gew.-% von zumindest einer anorganischen und/oder organischanorganischen Hybridkomponente, die Funktionalitäten zur Umsetzung mit Komponente A) und C) aufweist,
worin Komponente B) eine kolloidale Lösung ist von einer anorganischen polymeren Substanz aus zumindest einem Oxid von Metallen, Halbmetallen oder Nichtmetallen, die chemisch an Kohlenstoff-, Sauerstoff-, Stickstoff-, Schwefel- und/oder Halogenatome unter Ausbildung von Polymeren gebunden sind, die reaktive Gruppen trägt, die beim Härten der Imprägnierharzzusammensetzung in der Lage sind, chemisch an die organischen Komponenten A) und/oder C) zu binden;
C) 2 bis 80 Gew.-% von zumindest einer monomeren und/oder oligomeren ungesättigten Komponente zur Umsetzung mit Komponente A) und B), und die durch ethylenisch ungesättigte Strukturen, die eine oder mehrere vinylische oder allylische Doppelbindungen aufweisen, die radikalisch polymerisierbar sind, gekennzeichnet ist; und
D) 0 bis 15 Gew.-% üblicher Additive,
wobei sich die Gew.-% auf das Gesamtgewicht der Zusammensetzung beziehen.

2. Zusammensetzung nach Anspruch 1, worin die Komponente A) ein zahlenmittleres Molekulargewicht in einem Bereich von 400 bis 5000 g/mol aufweist.

3. Zusammensetzung nach Anspruch 1 oder 2, worin Komponente B) eine Komponente ist, ausgewählt aus Silikonen, Poly(alkoxy)silikaten, Poly(hydroxy)silikaten, Poly(alkoxy)titanaten, Poly(hydroxy)titanaten, Poly(oxo)metallaten, Poly(alkoxy)titanaten, Poly(hydroxy)titanaten, Poly(alkoxy)zirkonaten, Poly(hydroxy)zirkonaten, Poly(hydroxy)zinn und/oder Poly(alkoxy)zinnverbindungen.

4. Verfahren zum Fixieren von gewickelten Gegenständen, umfassend die Schritte
(a) Imprägnieren der gewickelten Gegenstände durch Aufbringen der Zusammensetzung gemäß den Ansprüchen 1 bis 3, und
(b) Härten der aufgebrachten Zusammensetzung.

5. Verfahren nach Anspruch 4, worin die gewickelten Gegenstände elektrische Wicklungen sind.

## Revendications

1. Composition pour fixer des articles enroulés comprenant
A) de 1 à 60 % en poids d'au moins un polyester α,β-insaturé et/ou une résine de polyester-imide en se basant sur au moins un acide mono-, di- ou tricarboxylique insaturé et/ou une molécule contenant un groupe acide mono-, di- ou tricarboxylique, au moins un polyol et/ou, dans le cas d'un polyester-imide insaturé, au moins un imide ayant des fragments imide cycliques de 5 chaînons,
dans laquelle ledit au moins un acide mono-, di- ou tricarboxylique α,β-insaturé et/ou une résine de polyester-imide est obtenue par mise en réaction de
(a) au moins un acide dicarboxylique à insaturation α,β-éthylénique, son anhydride et/ou un ester de l'acide dicarboxylique à insaturation α,β-éthylénique, et
(b) au moins un alcool ayant une ou plusieurs fonctionnalités hydroxyle par molécule, et
(c) dans le cas d'un imide de polyester, au moins une substance contenant un groupe imide ayant la formule 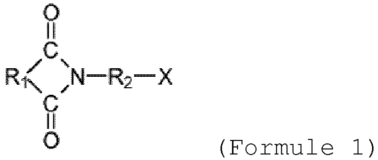 dans laquelle les groupes carbonyle sont en position 1.2,
ou 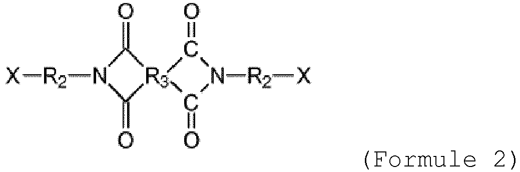 dans laquelle au moins 2 des 4 groupes carbonyle sont en position 1.2,
ou 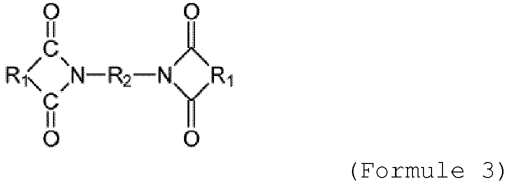 dans laquelle
R₁ est un fragment aliphatique, cycloaliphatique ou aromatique qui contient au moins un groupe carboxyle ou hydroxyle réactif ou une double liaison C=C ou des combinaisons de ceux-ci,
R₂ est un fragment aliphatique, cycloaliphatique ou aromatique ayant 2 à 30 atomes de carbone qui peut également contenir des atomes d'oxygène ou d'azote,
R₃ est un fragment aliphatique, cycloaliphatique ou aromatique, et
X est une fonctionnalité hydroxyle ou carboxy, et
(d) éventuellement un ou plusieurs acides mono-, di- ou tricarboxyliques qui sont différents de (a), et
(e) éventuellement un ou plusieurs polyols de polyéther ou polyols polymères, et
(f) éventuellement un ou plusieurs polyisocyanates ;
B) de 0,1 à 80 % en poids d'au moins un composant inorganique et/ou organique-inorganique hybride ayant des fonctionnalités qui réagissent avec le composant A) et C)
dans laquelle le composant B) est une solution colloïdale d'une substance polymère inorganique d'au moins un oxyde de métaux, métalloïdes ou non métaux chimiquement lié à des atomes de carbone, oxygène, azote, soufre et/ou halogène pour former des polymères, portant des groupes réactifs qui, lors du durcissement de la composition de résine d'imprégnation, sont capables de se lier chimiquement aux composants organiques A) et/ou C) ;
C) de 2 à 80 % en poids d'au moins un composant insaturé monomère et/ou oligomère pour réagir avec le composant A) et B), et qui est **caractérisé par** des structures à insaturation éthylénique ayant une ou plusieurs doubles liaisons vinyliques ou allyliques, qui sont polymérisables par voie radicalaire ; et
D) de 0 à 15 % en poids d'additifs habituels,
le % en poids étant basé sur le poids total de la composition.

2. Composition selon la revendication 1, dans laquelle le composant A) a un poids moléculaire moyen en nombre compris dans la plage allant de 400 à 5 000 g/mol.

3. Composition selon la revendication 1 ou 2, dans laquelle le composant B) est un composant sélectionné parmi les silicones, les poly(alcoxy)silicates, les poly(hydroxy)silicates, les poly(alcoxy)titanates, les poly(hydroxy)titanates, les poly(oxo)métallates, les poly(alcoxy)titanates, les poly(hydroxy)titanates, les poly(alcoxy)zirconates, les poly(hydroxy)zirconates, les composés de poly(hydroxy)étain et/ou de poly(alcoxy)étain.

4. Procédé pour la fixation d'articles enroulés comprenant les étapes consistant à
(a) imprégner les articles enroulés par application de la composition selon les revendications 1 à 3, et
(b) le durcissement de la composition appliquée.

5. Procédé selon la revendication 4, dans lequel les articules enroulés sont des enroulements électriques.
